# EUROPÄISCHE PATENTSCHRIFT

(11) **EP 2 260 069 B1**
(45) Veröffentlichungstag und Bekanntmachung des Hinweises auf die Patenterteilung: **01.08.2012**
(21) Anmeldenummer: 09728281.8
(22) Anmeldetag: 24.03.2009
(51) Int. Cl.: C08G 77/388, C08G 77/38, C08L 83/04

(54) **WACHSARTIGE ß-KETOCARBONYL-FUNKTIONELLE ORGANOSILICIUMVERBINDUNGEN**
WAX-LIKE SS-KETOCARBONYL-FUNCTIONAL ORGANOSILICON COMPOUNDS
COMPOSÉS ORGANOSILICIÉS CIREUX À FONCTION B-CÉTOCARBONYLE

(30) Priorität: 02.04.2008 DE 102008000931
(43) Veröffentlichungstag der Anmeldung: 15.12.2010
(73) Patentinhaber: Wacker Chemie AG, 81737 München (DE)
(72) Erfinder: HERZIG, Christian, 83329 Waging (DE)
(74) Vertreter: Deffner-Lehner, Maria
(86) Internationale Anmeldenummer: PCT/EP2009/053415
(87) Internationale Veröffentlichungsnummer: WO 2009/121751

(56) Entgegenhaltungen:
- DE-A1-102005 056 051
- US-A1- 2003 096 919

## Beschreibung

Die Erfindung betrifft wachsartige β-Ketocarbonyl-funktionelle Organosiliciumverbindungen, sowie ein Verfahren zu ihrer Herstellung.

Standardgemäß werden Siliconwachse aus Hydrogensiloxan und Alpha-Olefinen durch Hydrosilylierung hergestellt. Das lineare Polymer besteht also überwiegend aus Alkylmethylsiloxaneinheiten. Aufgrund der erforderlichen Mindestkettenlänge der Alkylreste ist deren Anteil an der Gesamtmasse sehr hoch (meist > 70%), sodass der Siliconcharakter weniger ausgeprägt ist. Außerdem hat der Standardprozess den inhärenten Nachteil einer Hydrosilylierung mit Restgehalt von SiH-Gruppen und dem Schwermetallgehalt des Wachses in Form von Platin-Verbindungen, die als Katalysatoren benötigt werden.

In DE 102 96 506 T5 werden lineare Siliconwachse beschrieben, die mindestens 25 Mol-% RR¹SiO-Einheiten enthalten in denen R die Bedeutung eines C₁-C₈-Alkylrestes oder C₆-C10-Arylrestes hat und R¹ einem langkettigen organischen Rest mit mindestens 16 C-Atomen entspricht, der 1 bis 10 Heteroatome enthalten kann. Diese Wachse enthalten einen hohen Prozentsatz langkettiger organischer Reste in lateraler Position der Siloxankette. Gegenüber Siloxanen mit einem hohen Anteil an Dimethylsiloxaneinheiten sind solche Polymere aufwändig und teuer in der Herstellung.

EP 1 624 010 A1 beschreibt ebenso lineare Siliconwachse, die außer C₁-C₂₀-Substituenten auch solche enthalten, die aus mindestens einer Behenestergruppe bestehen, die über einen Pentaerythritrest an die Siloxankette gebunden ist. Die molare Menge kann zwar über einen weiten Bereich variieren, doch ist allein mit der Herstellung dieses großen Substituenten erheblicher Aufwand verbunden. Letztlich wird der aliphatisch ungesättigte Behenester über Hydrosilylierung mit dem Siloxan verbunden, wodurch das Siliconwachs Schwermetall in Form des dazu benötigten Platin-Katalysators enthält. Da die Reaktionskomponenten sehr schlecht ineinander löslich sind, werden größere Mengen Lösungsmittel benötigt, um die Hydrosilylierung durchzuführen. Eine Herstellungsvariante beruht auf der Veresterung eines Behenestercarbinols mit Anhydridosiloxan. Hierbei wird zwar keine zusätzliche Schwermetallverbindung benötigt, aber auf Lösungsmittel kann auch nicht verzichtet werden.

In ähnlicher Weise werden laut US 2003/096919 A1 Siliconwachse aus einem SiH-, SH- oder amino-funktionellen Siloxan und einer Fettsäure- oder Fettalkoholkomponente hergestellt, die zusätzlich noch eine aliphatische Doppelbindung enthält. Bevorzugte Fettkomponente ist eine Behenverbindung. Die linearen Siloxane sind typischerweise kurzkettig, der organische Anteil der Wachsprodukte liegt daher meist erheblich über 50 Gew.-%, wodurch der Siloxancharakter wenig ausgeprägt ist.

In WO 2007/060113 A2 ist ein Verfahren zur Herstellung von β-Ketocarbonyl-funktionellen Organosiliciumverbindungen beschrieben, bei dem Diketenen mit Aminogruppen aufweisenden Organosiliciumverbindungen umgesetzt werden. Dabei werden Öle erhalten.

Es bestand die Aufgabe Organosiliciumverbindungen bereitzustellen, die Wachse sind und dabei aber nur einen geringen Anteil an längerkettigen Alkylresten enthalten und bei denen der Siliconcharakter erhalten bleibt. Weiterhin bestand die Aufgabe Organosiliciumverbindungen bereitzustellen, die frei von Platin-Verbindungen und Restmengen an SiH-Gruppen sind, womit keine risikoreiche Wasserstoffentwicklung möglich ist. Weiterhin bestand die Aufgabe ein Verfahren zur Herstellung dieser Organosiliciumverbindungen bereitzustellen, das einfach und kostengünstig ist und das katalysatorfrei spontan abläuft. Die Aufgabe wird durch die Erfindung gelöst.

Gegenstand der Erfindung sind wachsartige ß-Ketocarbonyl-funktionelle Organosiliciumverbindungen, die mindestens einen Si-gebundenen Rest **B** der allgemeinen Formel

[R³CH₂-C(=O)-CHR³-C(=O)-X-]_{y}L-(Si) (I)

enthalten, wobei
R³ einen einwertigen, gegebenenfalls substituierten Kohlenwasserstoffrest mit mindestens 12 C-Atomen, vorzugsweise mit mindestens 14 C-Atome bedeutet,
X ein Rest der Formel -O-, -NH-, -NR²- oder -S-, vorzugsweise -NH-, bedeutet, wobei R² einen einwertigen Kohlenwasserstoffrest mit 1 bis 18 C-Atomen, der ein oder mehrere separate Stickstoffatome enthalten kann, bedeutet,
L ein (y+1)-funktioneller organischer Rest, vorzugsweise ein zweiwertiger Kohlenwasserstoffrest mit 1 bis 18 C-Atomen, ist,
y 1, 2 oder 3, vorzugsweise 1, ist und
(Si)- die Bindung zum Si-Atom bedeutet,
mit der Maßgabe, dass R³ in einer Menge von höchstens 30 Gew.-%, vorzugsweise höchstens 25 Gew.-%, bevorzugt höchstens 20 Gel.-%, besonders bevorzugt höchstens 15 Gew.-%, insbesondere höchstens 10 Gew.-%, jeweils bezogen auf das Gesamtgewicht der Organosiliciumverbindungen, enthalten ist.

Gegenstand der Erfindung ist weiterhin ein Verfahren zur Herstellung der wachsartigen ß-Ketocarbonyl-funktionellen Organosiliciumverbindungen, indem Organosiliciumverbindungen (1) mit mindestens einem Rest **A** der allgemeinen Formel

[HX-]_{y}L- (Si) (II)

mit Diketenen (2) der allgemeinen Formel 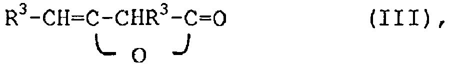 umgesetzt werden,
wobei R³, L, X, y und (Si)- die oben dafür angegebene Bedeutung haben.

Als Organosiliciumverbindungen (1) können Silane, oligomere oder polymere Organosiloxane eingesetzt werden. Sie enthalten vorzugsweise 1 bis 2000 Si-Atome, bevorzugt 2 bis 1000 Si-Atome und besonders bevorzugt 20 bis 700 Si-Atome.

Vorzugsweise werden als Organosiliciumverbindungen (1) Organopolysiloxane bestehend aus Einheiten der allgemeinen Formel 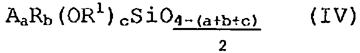 eingesetzt, wobei
A ein Rest der Formel (II) ist,
R einen einwertigen, gegebenenfalls substituierten Kohlenwasserstoffrest mit 1 bis 18 C-Atomen je Rest bedeutet,
R¹ ein Wasserstoffatom oder einen Alkylrest mit 1 bis 8 C-Atomen bedeutet,
a 0 oder 1
b 0, 1, 2 oder 3 und
c 0 oder 1 ist,
mit der Maßgabe, dass die Summe a+b+c kleiner oder gleich 3 ist und durchschnittlich mindestens ein Rest A je Molekül enthalten ist.

Bevorzugte Beispiele für Organosiliciumverbindungen (1) sind Organopolysiloxane der allgemeinen Formel

A_{g}R_{3-g}SiO (SiR₂O)₁(SiRAO)ₖSiR₃-_{g}A_{g} (V),

wobei
A ein Rest der Formel (II) ist,
g 0 oder 1, vorzugsweise 1,
l 0 oder eine ganze Zahl von 1 bis 2000 und
k 0 oder eine ganze Zahl von 1 bis 20, vorzugsweise 0, ist,
mit der Maßgabe, dass durchschnittlich mindestens ein Rest A je Molekül enthalten ist.

Die bei dem erfindungsgemäßen Verfahren eingesetzten Organosiliciumverbindungen (1) weisen vorzugsweise eine Viskosität von 1 bis 1 000 000 mPa.s bei 25°C, bevorzugt 100 bis 50 000 mPa.s bei 25°C, auf.

Beispiele für Reste R sind Alkylreste, wie der Methyl-, Ethyl-, n-Propyl-, iso-Propyl-, 1-n-Butyl-, 2-n-Butyl-, isoButyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Alkenylreste, wie der Vinyl-, 5-Hexenyl-, Cyclohexenyl-, 1-Propenyl-, Allyl-, 3-Butenyl- und 4-Pentenylrest; Alkinylrest, wie der Ethinyl-, Propargyl- und 1-Propinylrest; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für Kohlenwasserstoffreste R gelten auch für Kohlenwasserstoffreste R².

Weitere Beispiele für R² sind N-haltige Reste, wie
-CH₂CH₂NH₂, -CH₂CH₂NHCH₃, -CH₂CH₂N(CH₃)₂, -CH₂CH₂CH₂NH₂, -CH₂CH₂CH₂N (CH₃)2.

Vorzugsweise weist der Rest R³ höchstens 18 C-Atome auf. Bevorzugt weist der Rest R³ 14 bis 16 C-Atome auf, besonders bevorzugt ist er ein C₁₄-C₁₆-Alkylrest.
Beispiele für Reste R³ sind der Dodecyl-, Tetradecyl-, Hexadecyl- und der Octadecylrest.

Beispiele für Reste L sind
-CH₂CH₂-, -CH (CH₃) -, -CH₂CH₂CH₂-, -CH₂C(CH₃)H-, -CH₂CH₂CH₂CH₂-, -CH₂CH₂CH(CH₃)-, -CH₂CH₂CH₂NHCH₂CH₂-, -CH₂CH₂CH(CH₃)NHCH₂CH₂-, wobei der -CH₂CH₂CH₂-Rest bevorzugt ist.

Beispiele für Reste A sind
-CH₂CH₂CH₂OH,
-CH₂OCH₂CHOH,
-CH₂CH₂CH₂SH,
-CH₂CH₂CH₂NH₂,
-CH₂CH₂CH₂NHCH₃,
-CH₂CH(CH₃)NH₂,
-CH₂CH₂CH(CH₃)NH₂ und
-CH₂CH₂CH₂NHCH₂CH₂NH₂.

Organosiliciumverbindungen (1), die primäre Aminogruppen enthalten, werden bevorzugt nach dem in WO 2007/060113 A2 beschriebenen Verfahren, insbesondere Seite 2, Zeile 1 bis Seite 3, Zeile 1 und Seite 6 Zeile 30 bis Seite 9, Zeile 8, umgesetzt (incorporated by reference).

Vorzugsweise werden daher Organosiliciumverbindungen (1), die als Rest A primäre Aminogruppen enthalten, mit Diketenen (2) in Gegenwart von organischen Verbindungen (3), die die Reaktion von primären Aminogruppen mit ß-Ketocarbonylverbindungen verzögern oder verhindern umgesetzt. Beispiele für solche Verbindungen (3) sind Aldehyde und Ketone. Bevorzugt Beispiele sind Aceton, Butanon, Methylisobutylketon und Cyclohexanon. Vorzugsweise wird die Organosiliciumverbindung (1) zuerst mit der organischen Verbindung (3) gemischt und dann das Diketen (2) zugegeben. Bevorzugt werden in einer 1. Stufe Organosiliciumverbindungen (1) mit organischen Verbindungen (3) umgesetzt, wobei die Verbindungen (3) Schutzgruppen an den Aminogruppen im Rest A der Formel (II) bilden, und anschließend in einer 2. Stufe werden die in der 1. Stufe erhaltenen Organosiliciumverbindungen (1) mit den geschützten Aminogruppen (Umsetzungsprodukte aus (1) und (3)) mit Diketenen (2) umgesetzt. Bei der Umsetzung mit Diketen spaltet sich die Schutzgruppe überraschenderweise wieder von der Aminogruppe im Rest A der Formel (II) ab.

Enthalten die Organosiliciumverbindungen (1) im Rest A der Formel (II) nur sekundäre Aminogruppen, können sie direkt mit Diketenen (2) umgesetzt werden. Im Fall von X gleich -O- im Rest A der Formel (II) werden bevorzugt tert. Aminbasen als Katalysator verwendet, wobei deren Konzentration bevorzugt 50 bis 1000 Gew.- ppm beträgt.

Bei dem erfindungsgemäßen Verfahren wird Diketen (2) in Mengen von vorzugsweise 0,5 bis 1,5 Mol, bevorzugt 0,7 bis 1,2 Mol, je Mol HX-Gruppe im Rest A der Formel (II) der Organosiliciumverbindung (1) eingesetzt.

Die Diketene (2) sind bei Raumtemperatur feste Stoffe, so dass deren Umsetzung mit Verbindungen (1) bevorzugt in der Wärme erfolgt, vorzugsweise bei 50 bis 100°C, so dass die Diketene (2) in geschmolzenem Zustand vorliegen. Alternativ können auch Lösungsmittel verwendet werden, jedoch ist diese Vorgehensweise nicht bevorzugt.
Vorzugsweise wird das erfindungsgemäße Verfahren bei Druck der umgebenden Atmosphäre, also etwa bei 1020 hPa, durchgeführt. Es kann aber auch bei höheren oder niedrigeren Drücken durchgeführt werden.

Als wachsartige ß-Ketocarbonyl-funktionellen Organosiliciumverbindungen können Silane, oligomere oder polymere Organosiloxane erhalten werden. Sie enthalten vorzugsweise 1 bis 2000 Si-Atome, bevorzugt 2 bis 1000 Si-Atome und besonders bevorzugt 20 bis 700 Si-Atome.

Vorzugsweise werden als wachsartige ß-Ketocarbonyl-funktionelle Organosiliciumverbindungen Organopolysiloxane bestehend aus Einheiten der allgemeinen Formel 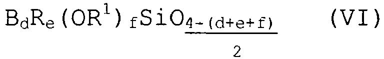 erhalten, wobei
B einen Rest der Formel (I) bedeutet,
R einen einwertigen, gegebenenfalls substituierten Kohlenwasserstoffrest mit 1 bis 18 C-Atomen je Rest bedeutet, R¹ ein Wasserstoffatom oder einen Alkylrest mit 1 bis 8 C-Atomen bedeutet,
d 0 oder 1
e 0, 1, 2 oder 3 und
f 0 oder 1 ist,
mit der Maßgabe, dass die Summe d+e+f kleiner oder gleich 3 ist und durchschnittlich mindestens ein Rest B je Molekül enthalten ist.

Bevorzugte Beispiele für wachsartige ß-Ketocarbonyl-funktionelle Organosiliciumverbindungen sind Organopolysiloxane der allgemeinen Formel

B_{z}R_{3-z}SiO (SiR₂O)ₘ (SiRBO)ₙSiR_{3-z}B_{z} (VII),

wobei
B einen Rest der Formel (I) bedeutet,
z 0 oder 1, vorzugsweise 1,
m 0 oder eine ganze Zahl von 1 bis 2000 und
n 0 oder eine ganze Zahl von 1 bis 20, vorzugsweise 0, ist,
mit der Maßgabe, dass durchschnittlich mindestens ein Rest B je Molekül enthalten ist.

In den erfindungsgemäßen ß-Ketocarbonyl-funktionellen Organopolysiloxanen ist R³ in einer Menge von vorzugsweise mindestens 2 Gew.-% enthalten.

Die erfindungsgemäßen ß-Ketocarbonyl-funktionellen Organopolysiloxane haben den Vorteil, dass sie schon bei einem geringen Gehalt an längerkettigen Alkylketten Wachse sind und trotzdem der Siliconcharakter erhalten bleibt.
Es ergibt sich der Vorteil, dass lineare Siloxane mit Alkyl-ßketoamid-gruppen am Kettenende selbst bis zu einem Polydimethylsiloxan-Anteil von mehr als 95 Gew-% noch wachsartige Feststoffkonsistenz haben. Diese Wachse haben je nach Kettenlänge des Siloxans einen eher weichen bis sehr spröden Charakter und sind aus den α-ω-Aminopropyldimethylsiloxanen und handelsüblichem Alkylketendimer einfach und sicher herstellbar.
Der Schmelzbereich der erhaltenen erfindungsgemäßen ß-Ketocarbonyl-funktionellen Organosiliciumverbindungen beträgt ca. 40-60°C, je nach Größe von R³.
Entsprechend des Herstellprozesses sind die erfindungsgemäßen Wachse schwermetallfrei sowie frei von SiH-Resten und sie haben ausgeprägten Siliconcharakter. Sie zeigen eine gute Löslichkeit in flüssigen Organopolysiloxanen, wie Siliconölen, im Gegensatz zu den hochalkylierten Standardwachsen.

Die erfindungsgemäßen Siliconwachse haben den Vorteil, dass mit ihnen eine "Gelierung" von, bevorzugt flüchtigen, linearen oder cyclischen Siloxanen erreicht wird. Dies findet insbesondere in der Kosmetik Anwendung. Die erfindungsgemäßen Siliconwachse werden in der Wärme in flüchtigen linearen oder cyclischen Siloxanen gelöst. Beim Abkühlen werden cremige Wachsformulierungen, die vorzugsweise weich und standfest sind und die vorzugsweise zu einem Großteil aus den flüchtigen oder dünnflüssigen linearen oder cyclischen Siloxanen bestehen, erhalten.

Gegenstand der Erfindung sind daher cremige Wachsformulierungen enthaltend
(a) erfindungsgemäße wachsartige ß-Ketocarbonyl-funktionelle Organosiliciumverbindungen und
(b) lineare, verzweigte oder cyclische Organosiliciumverbindungen mit einer Viskosität von 0,65 bis 100 000 mPa.s bei 25°C, vorzugsweise 0,65 bis 500 mPa.s bei 25°C.

Bevorzugt als (b) lineare oder cyclische Organosiliciumverbindungen sind lineare oder cyclische Organopolysiloxane, wie Hexamethylcyclotrisiloxan (D₃), Octamethylcyclotetrasiloxan (D₄), Decamethylcyclopentasiloxan (D₅), Hexamethyldisiloxan, Octamethyltrisiloxan, Decamethyltetrasiloxan oder auch längere Polydimethylsiloxane, die zwar keine ausgeprägte Flüchtigkeit besitzen, aber eine gute Löslichkeit in den erfindungsgemäßen Siliconwachsen.

Die cremigen Wachsformulierungen enthalten vorzugsweise 20 bis 95 Gew.-%, bevorzugt 40 bis 80 Gew.-% (b) lineare oder cyclische Organosilicumverbindungen und damit vorzugsweise 5 bis 80 Gew.-%, bevorzugt 20 bis 40 Gew.-% (a) erfindungsgemäße Siliconwachse, wobei sich die jeweiligen Gew.-% auf das Gesamtgewicht der cremigen Wachsformulierungen beziehen.

### Beispiel 1:

200g eines aminopropylterminierten Polydimethylsiloxans mit einem Aminequivalentgewicht von 1506 g/Mol NH₂ werden mit 15,4g Aceton vermischt und bei 26°C 2,5 Stunden gerührt. Nach Erwärmung auf 54°C gibt man 78 g techn. Alkylketen-dimer, welches aus einem Gemisch aus Palmitin-/Stearinsäure (ca. 30/70) hergestellt wurde, woraus ein Rest R³ von C₁₄/C₁₆-Alkyl resultiert, zu. Die technische Ware hat einen Diketengehalt von 85 %, so dass eine Stöchiometrie von 1,0:1,0 eingestellt ist. Nach Abkühlung auf ca. 47°C setzt eine exotherme Reaktion ein, die das Reaktionsgemisch um rund 17°C erwärmt. Das Alkylketen-dimer wird dabei vollständig gelöst, das Gemisch klart auf. Nach einer weiteren Stunde bei 64°C entfernt man das Aceton im Vakuum und kühlt das klare geschmolzene Wachs ab. Man erhält 276 g eines spröden Wachses, das eine Menge an längerkettigen C₁₄/C₁₆-Alkylresten R³ von 21 Gew.-% aufweist. Der Alkylketen-dimer-Umsatz beträgt über 99 % (¹H-NMR).

### Beispiel 2:

Es werden in Anlehnung an Beispiel 1 diesmal 200 g eines α,ω-Aminopropylpolydimethylsiloxans mit einem Aminequivalentgewicht von 5236 g/Mol NH₂ mit 4,4 g Aceton vermischt und bei 26°C 2,5 Stunden gerührt. Bei 60°C werden 22,5 g des gleichen Alkylketen-dimers wie in Beispiel 1 in stöchiometrischer Menge zugegeben. Bei leicht exothermer Reaktionen wird das Gemisch klar und nach einer weiteren Stunde bei 67°C entfernt man das Aceton. Bei nachgewiesenem Alkylketen-dimer-Umsatz von ca. 99 % erhält man 220 g eines Wachses mit einem Schmelzpunkt von ca. 48°C, das eine Menge an längerkettigen C₁₄/C₁₆-Alkylresten R³ von 7,3 Gew.-% aufweist.

### Beispiel 3:

Mit 300g eines α,ω-Aminopropylpolydimethylsiloxans (7519 g/Mol NH₂) und 4,6 g Aceton wird Beispiel 2 wiederholt, wobei diesmal 23,5 g des gleichen Alkylketen-dimers in stöchiometrischem Verhältnis dazugegeben werden. Identische Aufarbeitung ergibt 320 g eines Siliconwachses mit einem Schmelzpunkt von ca. 47°C, das eine Menge an längerkettigen C₁₄/C₁₆-Alkylresten R³ von 5,2 Gew.-% aufweist.

Die Löslichkeit des erfindungsgemäßen Siliconwachses in einem Siliconöl wird untersucht. Dazu werden die in der Tabelle angegebenen Mengen des erfindungsgemäßen Siliconwachses in 100g Dimethylpolysiloxan mit Trimethylsiloxanendgruppen und einer Viskosität von 35 mm²/s bei 25°C zugegeben. Die Ergebnisse sind in der Tabelle zusammengefasst.

### Beispiel 4:

Die Arbeitsweise von Beispiel 3 wird wiederholt mit der Abänderung, dass das Aminosiloxan mit 27,0 g eines techn. Alkylketen-dimers, das Beispiel 1 entspricht aber mit dem Unterschied, dass dessen Diketengehalt nur 75 % beträgt, umgesetzt wird. In einer stöchiometrischen Reaktion wird auch wieder quantitativer Umsatz des Alkylketen-dimers erreicht. Man erhält nach identischer Aufarbeitung 324 g Siliconwachs mit einem Schmelzpunkt von ca. 45°C, das eine Menge an längerkettigen C₁₄/C₁₆-Alkylresten R³ von 5,2 Gew.-% aufweist.

### Beispiel 5:

300g eines langkettigen α,ω-Aminopropylpolydimethylsiloxans mit einem Aminequivalentgewicht von 15380 g/Mol NH₂ (414 Me₂SiO-Einheiten) werden mit 2,3 g Aceton bei 26°C 2,5 Stunden gerührt. Die Zugabe von 13,2 g des in Beispiel 4 verwendeten 75 %-igen Alkylketen-dimers bei 60°C ergibt innerhalb von 4 Minuten nur eine schwach exotherme Reaktion. Nach einer Stunde Nachreaktion und Entfernung des Aceton im Vakuum erhält man 310 g Siliconwachs mit 45°C Schmelzpunkt, das eine Menge an längerkettigen C₁₄/C₁₆-Alkylresten R³ von nur 2,6 Gew.-% aufweist.

### Vergleichsversuch 1:

Zu einer Lösung aus Karstedt-Katalysator (entsprechend 2,0 mg Platin) in 30,3 g 1-Octadecen dosiert man bei 80°C insgesamt 184,5 g eines α,ω-Dihydrosiloxans mit einem Gehalt an Si-gebundenem Wasserstoff von 0,0542 Gew.-% und lässt bei 100°C eine Stunde nachreagieren. Das IR-Spektrum bestätigt einen SiH-Umsatz von > 99 %. Man erhält eine klare bräunliche Flüssigkeit mit einer Viskosität von 85 mm²/s bei 25°C. Das Alkylsiliconwachs enthält 12 Gew.-% Si-gebundene Octadecylreste, also erheblich mehr als in den erfindungsgemäßen Produkten der Beispiele 2 bis 5 und ist trotz längerer Alkylkette flüssig.

### Vergleichsversuch 2:

Die Arbeitsweise von Vergleichsversuch 1 wird wiederholt mit der Abänderung, dass 1-Octadecen diesmal aber mit 32,8 g eines α,ω-Dihydrosiloxans mit einem Gehalt an Si-gebundenem Wasserstoff von 0,305 Gew.-% umgesetzt wird. Bei einer Endkonzentration von 7 ppm SiH werden 99,6 % Umsatz erreicht.
Die schwach bräunliche Flüssigkeit mit einer Viskosität von 24 mm²/s bei 25°C enthält 44 Gew.-% Si-gebundene Octadecylreste, weit mehr als das erfindungsgemäße Produkt aus Beispiel 1, ist aber trotz dieses hohen Alkylgehaltes immer noch flüssig.

### Löslichkeit der Siliconwachse in Siliconöl:

### Beispiel und Vergleichsversuch 3:

Die Löslichkeit des erfindungsgemäßen Siliconwachses und eines Standard-Siliconwachses in einem Siliconöl wird untersucht.
Dazu werden die in der Tabelle angegebenen Mengen des erfindungsgemäßen Siliconwachses aus Beispiel 3 bei 50°C in 100g Dimethylpolysiloxan mit Trimethylsiloxanendgruppen und einer Viskosität von 35 mm²/s bei 25°C zugegeben.

Beim Vergleichsversuch 3 wird ein Standardwachs, ein Octadecylmethylsiloxan mit Trimethylsiloxanendgruppen (Schmelzpunkt von 43°C), ebenfalls in den in der Tabelle angegebenen Mengen bei 50°C in 100g desselben Siliconöls, eines Dimethylpolysiloxan mit Trimethylsiloxanendgruppen und einer Viskosität von 35 mm²/s bei 25°C, zugegeben.
Die Ergebnisse sind in der Tabelle zusammengefasst.

**Tabelle: Löslichkeit der Siliconwachse in Siliconöl**

| Wachs gemäß | Menge in 100g Siliconöl | Löslichkeit in Siliconöl |
|---|---|---|
| Beispiel 3 (erfindungsgemäßes Wachs) | 0,5 g | klar |
| | 1,5 g | klar |
| | 15 g | klar |
| | 35 g | klar |
| Vergleichsversuch 3 (Standardwachs) | 0,5 g | klar |
| | 1,5 g | trüb |
| | 15 g | 2-phasig |
| | 35 g | 2-phasig |

Während das erfindungsgemäße Siliconwachs in Siliconöl klar löslich ist, also seinen Siliconcharakter erhalten hat, ist das Standard-Siliconwachs gemäß Vergleichsversuch 3 in Siliconöl nicht mehr löslich, hat also seinen Siliconcharakter verloren.

### Beispiel 6:

50 g des Siliconwachses aus Beispiel 3 werden bei 60°C in 150 g Decamethylcyclopentasiloxan (D₅) gelöst. Beim Abkühlen wird eine cremig weiche standfeste Wachsformulierung, die zu 75 Gew.-% aus dem dünnflüssigen D₅ besteht, erhalten.

Mit dem erfindungsgemäßen Siliconwachs wird daher eine "Gelierung" von flüchtigen cyclischen Siloxanen erreicht.

## Patentansprüche

1. Wachsartige ß-Ketocarbonyl-funktionelle Organosiliciumverbindungen, die mindestens einen Si-gebundenen Rest **B** der allgemeinen Formel
[R³CH₂-C (=O) -CHR³-C (=O) -X-]_{y}L- (Si) (I)
enthalten, wobei
R³ einen einwertigen, gegebenenfalls substituierten Kohlenwasserstoffrest mit mindestens 12 C-Atomen, vorzugsweise mit mindestens 14 C-Atome bedeutet,
X ein Rest der Formel -O-, -NH-, -NR²- oder -S- bedeutet, wobei R² einen einwertigen Kohlenwasserstoffrest mit 1 bis 18 C-Atomen, der ein oder mehrere separate Stickstoffatome enthalten kann, bedeutet,
L ein (y+1)-funktioneller organischer Rest ist,
y 1, 2 oder 3, vorzugsweise 1, ist und
(Si)- die Bindung zum Si-Atom bedeutet,
mit der Maßgabe, dass R³ in einer Menge von höchstens 30 Gew.-%, vorzugsweise höchstens 25 Gew.-%, bevorzugt höchstens 20 Gew.-%, jeweils bezogen auf das Gesamtgewicht der Organosiliciumverbindungen, enthalten ist.

2. Wachsartige ß-Ketocarbonyl-funktionelle Organosiliciumverbindungen nach Anspruch 1, **dadurch gekennzeichnet, dass** X ein Rest der Formel -NH- ist.

3. Wachsartige ß-Ketocarbonyl-funktionelle Organosiliciumverbindungen nach Anspruch 1 oder 2, **dadurch gekennzeichnet, dass** R³ in einer Menge von höchstens 15 Gew.-%, bezogen auf das Gesamtgewicht der ß-Ketocarbonyl-funktionellen Organosiliciumverbindungen, enthalten ist.

4. Wachsartige ß-Ketocarbonyl-funktionelle Organosiliciumverbindungen nach Anspruch 1 oder 2, **dadurch gekennzeichnet, dass** es Organopolysiloxane der allgemeinen Formel
B_{z}R₃-_{z}SiO (SiR₂O)ₘ, (SiRBO) ₙSiR_{3-z}B_{z} (VII),
wobei
B der in Anspruch 1 angegebene Rest der Formel (I) ist,
z 0 oder 1, vorzugsweise 1,
m 0 oder eine ganze Zahl von 1 bis 2000 und
n 0 oder eine ganze Zahl von 1 bis 20, vorzugsweise 0, ist,
mit der Maßgabe, dass durchschnittlich mindestens ein Rest B je Molekül enthalten ist,
sind.

5. Verfahren zur Herstellung der wachsartigen ß-Ketocarbonyl-funktionellen Organosiliciumverbindungen, indem Organosiliciumverbindungen (1) mit mindestens einem Rest **A** der allgemeinen Formel
[HX-]_{y}L-(Si) (II)
mit Diketenen (2) der allgemeinen Formel 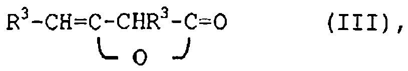 umgesetzt werden,
wobei R³, L, X, y und (Si)- die in Anspruch 1 dafür angegebene Bedeutung haben.

6. Verfahren zur Herstellung der wachsartigen ß-Ketoca bonyl-funktionellen Organosiliciumverbindungen nach Anspruch 5, **dadurch gekennzeichnet, dass** als Organosiliciumverbindungen (1) Organopolysiloxane der allgemeinen Formel
A_{g}R₃-_{g}SiO (SiR₂O)₁ (SiRAO)ₖSiR_{3-g}A_{g} (V),
wobei
A der in Anspruch 5 angegebene Rest der Formel (II) ist,
g 0 oder 1, vorzugsweise 1,
l 0 oder eine ganze Zahl von 1 bis 2000 und
k 0 oder eine ganze Zahl von 1 bis 20, vorzugsweise 0, ist,
mit der Maßgabe, dass durchschnittlich mindestens ein Rest
A je Molekül enthalten ist
eingesetzt werden.

7. Verfahren zur Herstellung der wachsartigen ß-Ketocarbonyl-funktionellen Organosiliciumverbindungen nach Anspruch 5 oder 6, **dadurch gekennzeichnet, dass** als Rest **A** ein Rest der Formel
H₂N-CH₂CH₂CH₂-
eingesetzt wird.

8. Cremige Wachsformulierungen enthaltend
(a) wachsartige ß-Ketocarbonyl-funktionellen Organosiliciumverbindungen gemäß einem der Ansprüche 1 bis 4 oder hergestellt nach einem der Ansprüche 5 bis 7 und
(b) lineare, verzweigte oder cyclische Organosiliciumverbindungen mit einer Viskosität von 0,65 bis 100 000 mPa.s bei 25°C, vorzugsweise 0,65 bis 500 mPa.s bei 25°C.

## Claims

1. Wax-like ß-ketocarbonyl-functional organosilicon compounds which comprise at least one Si-bonded radical **B** of the general formula
[R³CH₂-C (=O) -CHR³-C(=O) -X-]_{y}L- (Si) (I),
where
R³ is a monovalent, optionally substituted hydrocarbon radical having at least 12 carbon atoms, preferably having at least 14 carbon atoms, X is a radical of the formula -O-, -NH-, -NR²- or -S-, where R² is a monovalent hydrocarbon radical having 1 to 18 carbon atoms, which may comprise one or more separate nitrogen atoms,
L is a (y+1)-functional organic radical,
y is 1, 2 or 3, preferably 1, and
(Si)- is the bond to the Si atom,
with the proviso that R³ is present in an amount of at most 30% by weight, preferably at most 25% by weight, preferably at most 20% by weight, in each case based on the total weight of the organosilicon compounds.

2. Wax-like β-ketocarbonyl-functional organosilicon compounds according to Claim 1, **characterized in that** X is a radical of the formula -NH-.

3. Wax-like β-ketocarbonyl-functional organosilicon compounds according to Claim 1 or 2, **characterized in that** R³ is present in an amount of at most 15% by weight, based on the total weight of the β-ketocarbonyl-functional organosilicon compounds.

4. Wax-like β-ketocarbonyl-functional organosilicon compounds according to Claim 1 or 2, **characterized in that** they are organopolysiloxanes of the general formula
B_{z}R_{3-z}SiO(SiR₂O)ₘ(SiRBO)ₙSiR_{3-z}B_{z} (VII),
where
B is the radical of the formula (I) given in claim 1,
z is 0 or 1, preferably 1,
m is 0 or an integer from 1 to 2000 and
n is 0 or an integer from 1 to 20, preferably 0, with the proviso that on average at least one radical B is present per molecule.

5. Process for the preparation of the wax-like β-ketocarbonyl-functional organosilicon compounds, in which organosilicon compounds (1) having at least one radical **A** of the general formula
[HX-]_{y}L-(Si) (II)
are reacted with diketenes (2) of the general formula 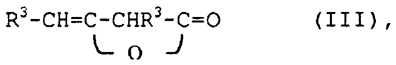 where R³, L, X, y and (Si)- have the meaning given therefor in Claim 1.

6. Process for the preparation of the wax-like β-ketocarbonyl-functional organosilicon compounds according to Claim 5, **characterized in that**, as organosilicon compounds (1), organopolysiloxanes of the general formula
A_{g}R_{3-g}SiO(SiR₂O)ₗ(SiRAO)ₖSiR_{3-g}A_{g} (V),
where
A is the radical of the formula (II) given in claim 5,
g is 0 or 1, preferably 1,
l is 0 or an integer from 1 to 2000 and
k is 0 or an integer from 1 to 20, preferably 0, with the proviso that on average at least one radical A is present per molecule,
are used.

7. Process for the preparation of the wax-like β-ketocarbonyl-functional organosilicon compounds according to Claim 5 or 6, **characterized in that** a radical of the formula
H₂N-CH₂CH₂CH₂-
is used as radical **A**.

8. Creamy wax formulations comprising
(a) wax-like β-ketocarbonyl-functional organosilicon compounds according to one of Claims 1 to 4 or prepared by one of Claims 5 to 7 and
(b) linear, branched or cyclic organosilicon compounds with a viscosity of 0.65 to 100 000 mPa.s at 25°C, preferably 0.65 to 500 mPa.s at 25°C.

## Revendications

1. Composés organosiliciés cireux à fonction β-cétocarbonyle, qui contiennent au moins un radical B lié au silicium, de formule générale
[R³CH₂-C(=O)-CHR³-C(=O)-X-]_{y}L-(Si) (I)
dans laquelle
R³ représente un radical hydrocarboné monovalent éventuellement substitué, ayant au moins 12 atomes de carbone, de préférence ayant au moins 14 atomes de carbone,
X représente un radical de formule -O-, -NH-, -NR²- ou -S-, R² représentant un radical hydrocarboné monovalent ayant de 1 à 18 atomes de carbone, qui peut contenir un ou plusieurs atomes d'azote séparés,
L est un radical organique (y+1)-fonctionnel,
y est 1, 2 ou 3, de préférence 1 et
(Si)- représente la liaison à l'atome de silicium, étant entendu que R³ est contenu en une quantité d'au maximum 30 % en poids, de préférence d'au maximum 25 % en poids, encore mieux d'au maximum 20 % en poids, chaque fois par rapport au poids total des composés organosiliciés.

2. Composés organosiliciés cireux à fonction β-cétocarbonyle selon la revendication 1, **caractérisés en ce que** X est un radical de formule -NH-.

3. Composés organosiliciés cireux à fonction β-cétocarbonyle selon la revendication 1 ou 2, **caractérisés en ce que** R³ est contenu en une quantité d'au maximum 15 % en poids, par rapport au poids total des composés organosiliciés à fonction β-cétocarbonyle.

4. Composés organosiliciés cireux à fonction β-cétocarbonyle selon la revendication 1 ou 2, **caractérisés en ce que** ce sont des organopolysiloxanes de formule générale
B₂R_{3-z}SiO(SiR₂O)ₘ(SiRBO)ₙSiR_{3-z}B_{z} (VII),
dans laquelle
B est le radical de formule (I) indiqué dans la revendication 1,
z est 0 ou 1, de préférence 1,
m est 0 ou un nombre entier valant de 1 à 2 000 et
n est 0 ou un nombre entier valant de 1 à 20, de préférence 0,
étant entendu qu'en moyenne au moins un radical B est contenu par molécule.

5. Procédé pour la préparation des composés organosiliciés cireux à fonction β-cétocarbonyle, par mise en réaction de composés organosiliciés (1) comportant au moins un radical A de formule générale
[HX-]_{y}L-(Si) (II)
avec des dicétènes (2) de formule générale 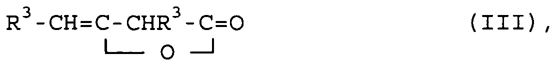 où
R³, L, X, y et (Si)- ont la signification indiquée pour ces symboles dans la revendication 1.

6. Procédé pour la préparation des composés organosiliciés cireux à fonction β-cétocarbonyle selon la revendication 5, **caractérisé en ce qu'**on utilise comme composés organosiliciés (1) des organopolysiloxanes de formule générale
A_{g}R_{3-g}SiO(SiR₂O)ₗ(SiRAO)ₖSiR_{3-g}A_{g} (V),
dans laquelle
A est le radical de formule (II) indiqué dans la revendication 5,
g est 0 ou 1, de préférence 1,
l est 0 ou un nombre entier valant de 1 à 2 000 et
k est 0 ou un nombre entier valant de 1 à 20, de préférence 0,
étant entendu qu'en moyenne au moins un radical A est contenu par molécule.

7. Procédé pour la préparation des composés organosiliciés cireux à fonction β-cétocarbonyle selon la revendication 5 ou 6, **caractérisé en ce qu'**on utilise comme radical A un radical de formule
H₂N-CH₂CH₂CH₂-.

8. Compositions de cires crémeuses, contenant
(a) des composés organosiliciés cireux à fonction β-cétocarbonyle selon l'une quelconque des revendications 1 à 4 ou préparés selon l'une quelconque des revendications 5 à 7 et
(b) des composés organosiliciés linéaires, ramifiés ou cycliques ayant une viscosité de 0,65 à 100 000 mPa.s à 25°C, de préférence de 0,65 à 500 mPa.s à 25 °C.
